# FASCICULE DE BREVET EUROPEEN

(11) **EP 1 351 563 B1**
(45) Date de publication et mention de la délivrance du brevet: **18.05.2005**
(21) Numéro de dépôt: 01998212.3
(22) Date de dépôt: 27.11.2001
(51) Int. Cl.: A01B 15/14

(54) **CHARRUE MULTI-CORPS A LARGEUR DE TRAVAIL VARIABLE**
MEHRSCHARPFLUG MIT VARIABLER ARBEITSBREITE
GANG-PLOUGH WITH VARIABLE WORKING WIDTH

(30) Priorité: 28.11.2000 FR 0015326
(43) Date de publication de la demande: 15.10.2003
(73) Titulaire: Etablissements Gregoire Besson et Cie, 49230 Montfaucon-sur-Moine (FR)
(72) Inventeur: BESSON, Patrick, F-49190 Getigne (FR); PINEAU, Gilbert, F-49230 Montigné sur Moine (FR)
(74) Mandataire: Fosse, Danièle
(86) Numéro de dépôt international: PCT/FR2001/003740
(87) Numéro de publication internationale: WO 2002/043468

(56) Documents cités:
- EP-A- 0 540 408
- DE-A- 4 011 109
- FR-A- 2 571 924
- GB-A- 2 166 932

## Description

La présente invention concerne une charrue, de préférence portée ou semi-portée, multi-corps, éventuellement réversible, à largeur de travail variable par exemple de 12" à 20" sans changement de corps.

Des charrues polysocs, pour lesquelles des réglages spéciaux permettant d'obtenir plusieurs largeurs de travail sans changer les corps, sont connues. Le principe est de modifier l'écartement latéral entre tous les corps de telle sorte que, à partir d'un écartement de socs de 16 pouces, (environ 40 centimètres) par exemple, on puisse avec la même charrue réduire la largeur de travail entre corps à 12 pouces, (environ 30 centimètres), ou au contraire l'augmenter jusqu'à 20 pouces (environ 50 centimètres).

Différentes solutions peuvent être retenues pour obtenir une largeur de travail variable avec les mêmes corps. Il est ainsi possible d'envisager un montage en nombre variable d'entretoises ou de cales de différentes épaisseurs entre l'age et les étançons ou entre les ages et la poutre principale. Il est également possible de prévoir des cales excentriques placées dans les supports de fixation des ages. Il est également possible d'utiliser, sur un bâti extensible, des éléments modulaires dont les plaques de liaisons permettent de faire varier la position de chaque corps par rapport au précédent. Enfin, il est également possible de déplacer simultanément tous les corps avec un système de pivotement basé sur le principe du parallélogramme déformable permettant d'écarter ou de rapprocher ces corps pour augmenter ou diminuer leur largeur effective de travail. Ce type de dispositif s'applique notamment à des charrues constituées d'un chariot central sur lequel sont solidarisées une poutre avant support de corps et une poutre arrière support de corps. Dans ce cas, les supports de corps de la poutre montés à pivotement sur lesdites poutres au moyen d'axes appropriés, sont en outre respectivement solidarisés entre eux au niveau d'un deuxième axe pivot par un organe d'accouplement tel qu'une bielle, de manière à constituer des parallélogrammes déformables. La bielle est, pour chaque poutre, reliée à une de ses extrémités à un point fixe du chariot central disposé entre poutre avant et poutre arrière de telle sorte que, lors du déport latéral des poutres, les corps sont simultanément déplacés.

Cependant, dans le cas de charrues où la largeur de travail est susceptible de varier de 12 pouces à 20 pouces, celle-ci étant obtenue par une commande mécanique, parmi les inconvénients on constate des dispositifs relativement complexes entraînant une maintenance supplémentaire, ainsi que des temps de réglage importants lorsque l'on doit modifier manuellement cette largeur de travail.

Un but de la présente invention est donc de proposer une charrue, éventuellement réversible, multi-corps à largeur de travail variable dans laquelle tous les dispositifs de commande de la variation de la largeur de raie tels que tringlerie, bielles, vérins ou autres ont été supprimés.

Un autre but de la présente invention est de proposer une charrue, éventuellement réversible, multi-corps dont la conception des moyens de variation de la largeur de travail permet de faciliter le franchissement d'obstacles en évitant les déclenchements trop fréquents des systèmes de sécurité.

A cet effet, l'invention a pour objet une charrue multi-corps à largeur de travail variable entre une largeur minimale et une largeur maximale avec les mêmes corps, du type comprenant au moins une poutre support de corps déplaçable entre deux positions extrêmes de manière à pouvoir faire varier l'angle formé par la poutre et la ligne horizontale de traction, lesdits corps, constitués respectivement d'un age relié par l'intermédiaire d'un étançon aux pièces travaillantes, incluant au moins un sep et un contre-sep, étant montés à pivotement sur lesdites poutres de manière à pouvoir modifier l'angle entre les corps et la poutre, caractérisée en ce que les corps sont montés à pivotement libre entre deux positions extrêmes de largeur de travail par rapport à la poutre support par l'intermédiaire d'un axe pivot, le bord d'attaque des pièces travaillantes du corps étant situé sensiblement en aval dudit axe pivot, chaque corps étant positionné par rapport à l'axe pivot de sorte que le contre-sep du corps en position de travail dans des conditions normales s'auto-aligne le long d'une ligne parallèle à la ligne de traction lors de l'avancement de la charrue.

Grâce à ce montage à pivotement libre des corps par rapport à la poutre support, on observe un repositionnement naturel des corps par rapport à la ligne de traction suite à une modification du positionnement angulaire de la poutre par rapport à la ligne horizontale du traction.

L'invention sera bien comprise à la lecture de la description suivante d'un exemple de réalisation, en référence aux dessins annexés dans lesquels :
la figure 1 représente une vue de dessus d'une charrue semi-portée à largeur de travail réglable;

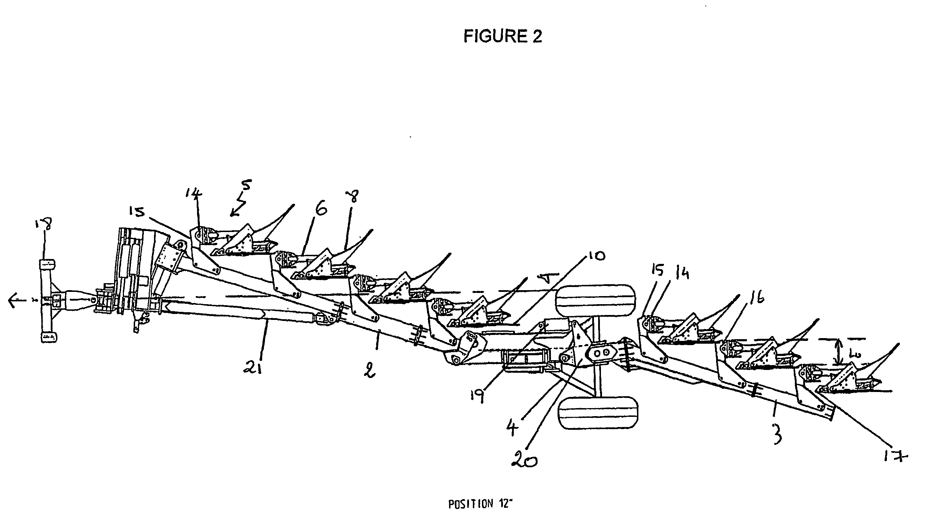

la figure 2 représente une vue de dessus de la charrue semi-portée de la figure 1 dans une position dans laquelle on a réduit la largeur de travail;

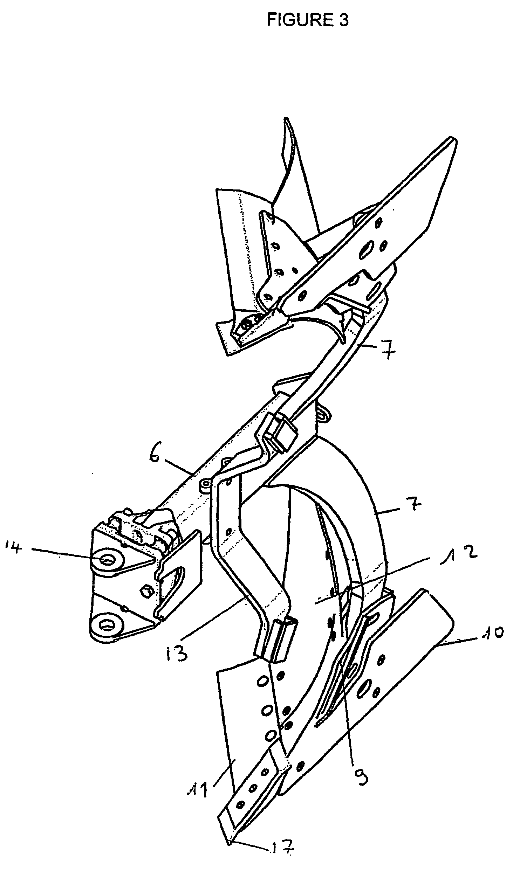

la figure 3 représente une vue en perspective d'un corps formé d'un ensemble age, étançon, pièces travaillantes;

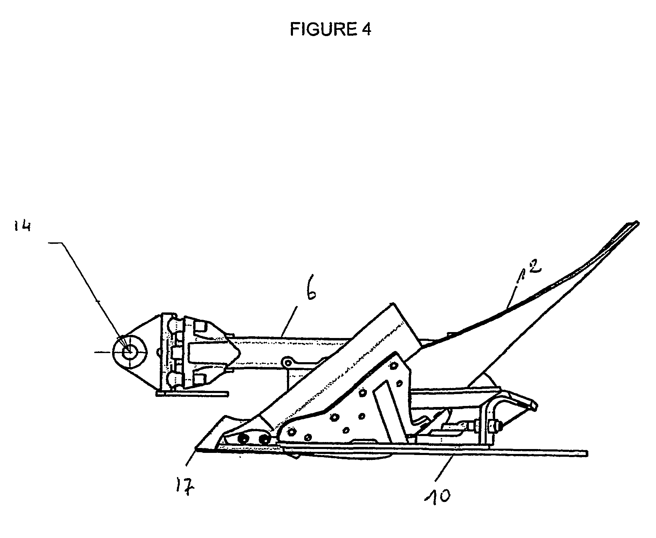

la figure 4 représente une vue de dessus du corps de la figure 3; et

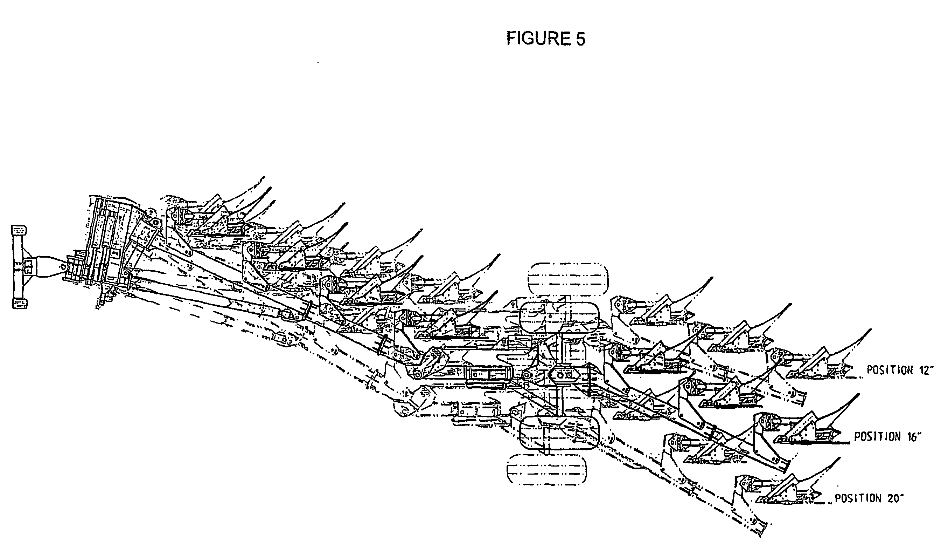

la figure 5 représente une vue de dessus de la charrue semi-portée de la figure 1 avec une représentation schématique des déplacements angulaires des différents éléments constitutifs lors du passage d'une largeur de raie à une autre largeur de raie.

La charrue, objet de l'invention représentée sous la référence générale 1, peut être une charrue portée, semi-portée, tractée, réversible ou non. Dans les exemples de réalisation représentés, cette charrue comporte un chariot central 4 sur lequel sont montées d'une part une poutre avant 2, d'autre part une poutre arrière 3. La poutre avant 2 est reliée, au moyen d'un attelage 18 qui ne sera pas décrit plus en détail ci-après, au tracteur. Il est à noter que l'invention s'applique de la même manière à une charrue mono-poutre.

Dans les exemples représentés, la charrue est du type réversible. Le dispositif de réversibilité est constitué de deux vérins disposés croisés au voisinage de l'attelage. Ce dispositif est d'un type connu et ne sera donc pas décrit en détail ci-après. Toutefois, l'invention s'applique de la même manière à une charrue non-réversible.

Chaque poutre 2, 3 de la charrue est en outre déplaçable angulairement par rapport à la ligne T de traction horizontale. Les déplacements des poutres avant 2 et arrière 3 pour modifier l'angle formé par ces poutres avec la ligne T de traction horizontale peuvent être commandés au moyen de dispositifs de commande affectant un grand nombre de formes. Le déplacement de ces poutres avant-arrière peut être rendu cinématiquement solidaire ou au contraire être réalisé indépendant. De tels dispositifs de commande étant bien connus à ceux versés dans cet art, ils ne seront pas décrits plus en détail ci-après. Les éléments essentiels de tels dispositifs ont été notamment représentés en 19, 20, 21 aux figures.

Cette charrue comporte encore des corps 5 de charrue montés respectivement à pivotement sur les poutres avant 2 ou arrière 3 de manière à pouvoir modifier l'angle formé entre les corps 5 et la poutre 2 ou 3. Il est à noter qu'on entend par corps de charrue l'ensemble constitué d'un age 6 relié, par l'intermédiaire d'un étançon 7, aux pièces travaillantes 8, ces pièces pouvant notamment inclure un sep 9 sur lequel sont fixés un soc 11 et un versoir 12 et un contre-sep 10. Le contre-sep 10 est agencé pour glisser le long de la muraille. Cette pièce 10, en s'appuyant latéralement sur la muraille, contribue à l'équilibre de la charrue. Il est encore possible d'utiliser, à titre de pièces travaillantes, une rasette disposée en amont de l'ensemble sep 9, contre-sep 10 décrit ci-dessus. Seule la porte rasette 13 a été représentée aux figures. De tels corps 5 sont à nouveau parfaitement connus à ceux versés dans cet art.

Sur la base de ce qui vient d'être décrit ci-dessus, pour permettre le réglage de la largeur d'une raie, il convient d'une part de déplacer la poutre avant et la poutre arrière pour modifier l'angle formé par ces poutres avec la ligne de traction horizontale, d'autre part de déplacer les corps portés par ces poutres de manière à obtenir une distance entre corps qui sera toujours la même d'un couple de corps à un autre dans une position de réglage déterminée.

Aussi, de manière caractéristique à l'invention, les corps sont montés, entre deux positions extrêmes de largeur de travail, à pivotement libre par rapport à la ou aux poutre(s) de support des corps par l'intermédiaire d'un axe pivot 14. En outre, le bord d'attaque 17 des pièces travaillantes 8 des corps 5 est situé sensiblement en aval de l'axe pivot 14 et chaque corps 5 est positionné par rapport à l'axe pivot 14 de sorte que le contre-sep 10 du corps 5 en position de travail dans des conditions normales s'auto-aligne le long d'une ligne parallèle à la ligne T de traction lors de l'avancement de la charrue. On obtient ainsi un déplacement automatique et naturel des corps 5 montés à pivotement libre sur les poutres 2, 3 de sorte que, dès que l'on fait varier la position angulaire d'une poutre 2 par rapport à la ligne horizontale de traction, on observe au cours de la poursuite de l'avancement de la charrue un réalignement automatique des corps 5 par rapport à la ligne de traction T dans des conditions normales de travail, c'est à dire en l'absence d'obstacles tels que pierres au sol.

Un tel montage à pivotement libre de ces corps 5 présente deux avantages majeurs à savoir d'une part, la suppression de dispositifs de commande complexes tels que tringlerie, vérins, ou autres utilisés jusqu'à présent, d'autre part, un franchissement facilité d'obstacles, les corps pouvant aisément s'effacer latéralement lors du passage d'un obstacle du fait de leur mode de liaison à la poutre support.

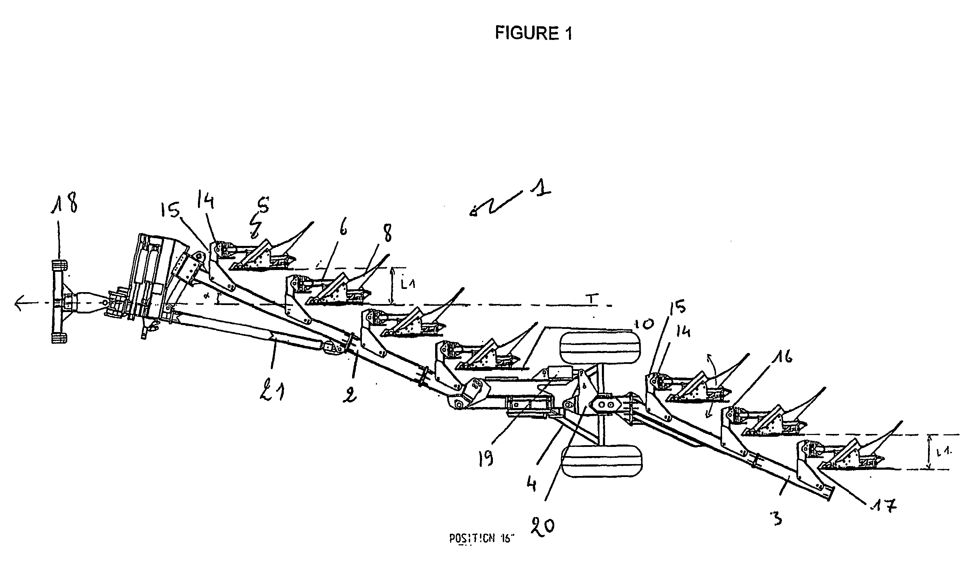

Les liaisons entre corps et poutres peuvent être diverses et variées. Dans les exemples représentés, les corps 5 sont assemblés librement à la poutre 2 ou 3 par l'intermédiaire de potences 15 portant l'axe pivot 14. Cette potence 15 affecte sensiblement la forme d'un L dont l'une des branches est couplée de manière stationnaire à la poutre tandis que l'autre branche porte l'axe pivot 14 de liaison du corps 5 à la poutre 2 ou 3. Les pièces travaillantes 8 du corps 5 auto-orientées sous l'effet de la traction sont quant à elle couplées à l'age 6 par l'intermédiaire d'un étançon 7, l'ensemble étant agencé de sorte que la résultante des forces s'appliquant sur les pièces travaillantes 8 lors du travail passe par l'age 6 et l'axe pivot 14. L'étançon 7 reliant l'age 6 aux pièces travaillantes 8 est quant à lui déporté en dehors de l'axe de l'age comme le montre la figure 1. Il en est généralement de même du support 13 porte-rasette qui est déporté latéralement par rapport à l'axe de l'age 8.

Les positions extrêmes des corps 5 pivotants sont quant à elles délimitées par des butées 16, de préférence élastiques, montées entre potence 15 et age 6, respectivement sur la potence 15 ou sur l'age 6 pour faciliter après franchissement d'un obstacle le repositionnement naturel des corps 5 par rapport à la ligne T de traction. De même le positionnement de l'axe pivot 14 d'articulation du corps 5 sur la potence 15 peut être réglable en position en fonction notamment de la nature du sol à labourer. On note qu'une telle liaison des corps à la poutre permet de réduire la sollicitation des dispositifs de sécurité non-stop ou autres équipant normalement ces corps. En effet, du fait de la possibilité d'effacement latéral du corps 5 lors d'un franchissement d'un obstacle, on constate un déclenchement moindre des sécurités et, par suite, une maintenance réduite de ces derniers.

Il est à noter, que dans ce qui précède, on entend par ligne de traction ou d'attelage une ligne droite imaginaire qui passe par le centre des efforts ou de résistance de la charrue remorquée, par la chape ou attelage et va jusqu'au centre de la prise de force où l'attelage est fixé à celle-ci.

Par ailleurs, on entend par bord d'attaque des pièces travaillantes du corps la partie des pièces travaillantes la plus en amont pris dans le sens d'avancement de la charrue.

### Liste des références

- 1: Charrue
- 2: Poutre avant
- 3: Poutre arrière
- 4: Chariot
- 5: Corps
- 6: Age
- 7: Etançon
- 8: Pièces travaillantes
- 9: Sep
- 10: Contre-sep
- 11: Soc
- 12: Versoir
- 13: Porte-rasette
- 14: Axe de pivot
- 15: Potence
- 16: Butées
- 17: Bord d'attaque
- 18: Attelage
- 19: )
- 20: ) Pièces pour variation angulaire des poutres
- 21: )

## Revendications

1. Charrue (1) multi-corps (5) à largeur de travail variable entre une largeur minimale (20) et une largeur maximale avec les mêmes corps, du type comprenant au moins une poutre (2, 3) support de corps (5) déplaçable entre deux positions extrêmes de manière à pouvoir faire varier l'angle (α) formé par la poutre (3) et la ligne horizontale de (T) traction, lesdits corps (5), constitués respectivement d'un age (6) relié par l'intermédiaire d'un étançon (7) aux pièces travaillantes (8), incluant au moins un sep (9) et un contre-sep (10), étant montés à pivotement sur lesdites poutres (3, 4) de manière à pouvoir modifier l'angle entre les corps (5) et la poutre (2, 3),
**caractérisée en ce que** les corps (5) sont montés à pivotement libre entre deux positions extrêmes de largeur de travail par rapport à la poutre support (2, 3) par l'intermédiaire d'un axe pivot (14), le bord d'attaque (17) des pièces travaillantes (8) du corps (5) étant situé sensiblement en aval dudit axe pivot (14), chaque corps (5) étant positionné par rapport à l'axe pivot (14) de sorte que le contre-sep (10) du corps (5) en position de travail dans des conditions normales s'auto-aligne le long d'une ligne parallèle à la ligne (T) de traction lors de l'avancement de la charrue.

2. Charrue (1) multi-corps (5) à largeur de travail variable selon la revendication 1,
**caractérisée en ce que** les corps (5) sont assemblés librement à la poutre (2, 3) par l'intermédiaire de potences (15) portant l'axe pivot (14).

3. Charrue (1) multi-corps (5) à largeur de travail variable selon l'une des revendications 1 et 2,
**caractérisée en ce que** les pièces travaillantes (8) du corps (5) auto-orientées sous l'effet de la traction sont couplées à l'age (6) par l'intermédiaire d'un étançon (7) de sorte que la résultante des forces s'appliquant sur les pièces travaillantes (8) lors du travail passe par l'age (6) et l'axe pivot (14).

4. Charrue (1) multi-corps (5) à largeur de travail variable selon la revendication 3,
**caractérisée en ce que** l'étançon (7) reliant l'age (6) aux pièces travaillantes (8) est déporté en dehors de l'axe de l'age (6).

5. Charrue (1) multi-corps (5) à largeur de travail variable selon l'une des revendications 1 à 4,
**caractérisée en ce que** les positions extrêmes des corps (5) pivotants sont délimitées par des butées (16), de préférence élastiques, montées entre potence (15) et age (6), respectivement sur la potence (15) ou sur l'age (6) pour faciliter, après franchissement d'un obstacle, le repositionnement naturel des corps (5) par rapport à la ligne (T) de traction.

## Patentansprüche

1. Pflug (1) mit mehreren Scharen (5) mit variabler Arbeitsbreite zwischen einer minimalen Breite (20) und einer maximalen Breite mit denselben Scharen, mit mindestens einem die Scharen (5) haltenden Träger (2, 3), der zwischen zwei extremen Positionen derart verstellbar ist, dass der zwischen dem Träger (3) und der horizontalen Zuglinie (T) gebildete Winkel (α) variiert werden kann, wobei die genannten Scharen (5), welche jeweils durch einen Pflugbalken (6) gebildet sind, welcher über einen Halter (7) mit den arbeitenden Teilen (8) verbunden ist, die mindestens eine Pflugsohle (9) und eine Anlage (10) umfassen, die derart schwenkbar auf den genannten Trägern (3, 4) montiert sind, dass der Winkel zwischen den Scharen (5) und dem Träger (2, 3) verändert werden kann,
**dadurch gekennzeichnet, dass** die Scharen (5) über eine Schwenkachse (14) frei schwenkbar zwischen zwei extremen Positionen einer Arbeitsbreite in Bezug auf den haltenden Träger (2, 3) montiert sind, wobei die Vorderkante (17) der arbeitenden Teile (8) der Schar (5) im Wesentlichen in Zugrichtung hinter der genannten Schwenkachse (14) angeordnet ist, wobei jede Schar (5) derart in Bezug auf die Schwenkachse (14) positioniert ist, dass die Anlage (10) der Schar (5) in Arbeitsstellung unter normalen Bedingungen sich selbsttätig entlang einer parallel zur Zuglinie (T) verlaufenden Linie bei der Pflugvorwärtsbewegung fluchtend einstellt.

2. Pflug (1) mit mehreren Scharen (5) mit variabler Arbeitsbreite nach Anspruch 1,
**dadurch gekennzeichnet, dass** die Scharen (5) über die Schwenkachse (14) tragende Arme (15) mit dem Träger (2, 3) frei verbunden sind.

3. Pflug (1) mit mehreren Scharen (5) mit variabler Arbeitsbreite nach einem der Ansprüche 1 und 2,
**dadurch gekennzeichnet, dass** die unter der Wirkung des Ziehens selbsttätig ausgerichteten arbeitenden Teile (8) der Schar (5) über einen Halter (7) mit dem Pflugbalken (6) gekoppelt sind, so dass die Resultierende der Kräfte, die bei der Arbeit auf die arbeitenden Teile (8) wirken, durch den Pflugbalken (6) und die Schwenkachse (14) verläuft.

4. Pflug (1) mit mehreren Scharen (5) mit variabler Arbeitsbreite nach Anspruch 3,
**dadurch gekennzeichnet, dass** der den Pflugbalken (6) mit den arbeitenden Teilen (8) verbindende Halter (7) außerhalb der Achse des Pflugbalkens (6) verlagert ist.

5. Pflug (1) mit mehreren Scharen (5) mit variabler Arbeitsbreite nach einem der Ansprüche 1 bis 4,
**dadurch gekennzeichnet, dass** die extremen Positionen der schwenkbaren Scharen (5) durch vorzugsweise elastische Anschläge (16) begrenzt sind, welche zwischen Arm (15) und Pflugbalken (6) jeweils auf dem Arm (15) oder auf dem Pflugbalken (6) montiert sind, um nach Überwindung eines Hindernisses die natürliche Repositionierung der Scharen (5) in Bezug auf die Zuglinie (T) zu erleichtern.

## Claims

1. Multiple-base (5) plough (1), with a working width which is variable between a minimal width (20) and a maximal width with the same bases, of the type comprising at least one beam (2, 3) to support the body (5) which can be displaced between two extreme positions, such as to be able to make the angle (α) formed by the beam (3) and the horizontal traction line (T) vary, the said bases (5), consisting respectively of a beam (6) which is connected by means of a brace (7) to the working parts (8), including at least one runner (9) and a counter-runner (10), being fitted such as to pivot on the said beams (3, 4) such as to be able to modify the angle between the bodies (5) and the beam (2, 3), **characterised in that** the bodies (5) are fitted such as to pivot freely between two extreme positions of working width relative to the support beam (2, 3), by means of a pivoting shaft (14), the leading edge (17) of the working parts (8) of the body (5) being situated substantially downstream from the said pivoting shaft (14), each body (5) being positioned relative to the pivoting shaft (14) such that the counter-runner (10) of the body (5) in the working position is self-aligned in normal conditions along a line which is parallel to the line (T) of traction during advance of the plough.

2. Multiple-base (5) plough (1) according to claim 1, with a working width which is variable, **characterised in that** the bodies (5) are connected freely to the beam (2, 3) by means of brackets (15) which support the pivoting shaft (14).

3. Multiple-base (5) plough (1) according to claim 1 or claim 2, with a working width which is variable, **characterised in that** the working parts (8) of the body (5), which are self-oriented under the effect of the traction, are coupled to the beam (6) by means of a brace (7), such that the resultant of the forces which are applied to the working part (8) during work passes via the beam (6) and the pivoting shaft (14).

4. Multiple-base (5) plough (1) according to claim 3, with a working width which is variable, **characterised in that** the brace (7) which connects the beam (6) to the working parts (8) is offset outside the axis of the beam (6) .

5. Multiple-base (5) plough (1) according to any one of claims 1 to 4, with a working width which is variable, **characterised in that** the extreme positions of the pivoting bodies (5) are delimited by stops (16) which are preferably resilient, fitted respectively between the bracket (15) and the beam (6), or on the bracket (15) or on the beam (6), in order to facilitate natural repositioning of the bodies (5) relative to the traction line (T), after clearance of an obstacle.
